# FASCICULE DE BREVET EUROPEEN

(11) **EP 4 033 389 B1**
(45) Date de publication et mention de la délivrance du brevet: **07.06.2023**
(21) Numéro de dépôt: 22153315.1
(22) Date de dépôt: 25.01.2022
(51) Int. Cl.: G06F 21/75, G06F 21/87

(54) **DISPOSITIF DE PROTECTION ET DE SUPERVISION D'UN SYSTÈME ÉLECTRONIQUE COMPRENANT AU MOINS UN COMPOSANT ÉLECTRONIQUE, PROCÉDÉ ASSOCIÉ DE PROTECTION ET DE SUPERVISION DE L'INTÉGRITÉ DU SYSTÈME ÉLECTRONIQUE ET DU DISPOSITIF, ET DE BROUILLAGE D'ATTAQUES**
VORRICHTUNG ZUM SCHUTZ UND ZUR ÜBERWACHUNG EINES ELEKTRONISCHEN SYSTEMS, DIE MINDESTENS EINE ELEKTRONISCHE KOMPONENTE UMFASST, ENTSPRECHENDES VERFAHREN ZUM SCHUTZ UND ZUR ÜBERWACHUNG DER INTEGRITÄT DES ELEKTRONISCHEN SYSTEMS UND DER VORRICHTUNG SOWIE ZUM STÖREN VON ANGRIFFEN
DEVICE FOR PROTECTING AND FOR MONITORING AN ELECTRONIC SYSTEM COMPRISING AT LEAST ONE ELECTRONIC COMPONENT ASSOCIATED METHOD FOR PROTECTING AND FOR MONITORING THE INTEGRITY OF THE ELECTRONIC SYSTEM AND THE DEVICE, AND FOR JAMMING ATTACKS

(30) Priorité: 26.01.2021 FR 2100695
(43) Date de publication de la demande: 27.07.2022
(73) Titulaire: Commissariat à l'Energie Atomique et aux Energies Alternatives, 75015 Paris (FR)
(72) Inventeur: GAINE, Clément, 38054 GRENOBLE Cedex 09 (FR); NIKOLOVSKI, Jean-Pierre, 38054 GRENOBLE Cedex 09 (FR); ABOULKASSIMI, Driss, 38054 GRENOBLE Cedex 09 (FR)
(74) Mandataire: Cabinet Nony

(56) Documents cités:
- US-A1- 2015 351 292
- US-A1- 2019 372 751
- Dumont Mathieu: "Modélisation de l'injection de faute électromagnétique sur circuits intégrés sécurisés et contre-mesures", PhD thesis, Chap. 4, 9 octobre 2020 (2020-10-09), XP055843204, Extrait de l'Internet: URL:https://tel.archives-ouvertes.fr/tel-0 3160444/document [extrait le 2021-09-21]

## Description

### Domaine technique

La présente invention concerne le domaine général de la protection des composants, circuits et systèmes électroniques.

Elle concerne en particulier la protection contre les attaques physiques des composants, circuits ou systèmes électroniques contre les attaques par injection de fautes et analyse du rayonnement électronique émis par au moins un composant électronique ainsi que contre les attaques par canaux cachés, aussi appelés par canaux auxiliaires, par laser, chocs thermiques et mécaniques ou, encore par tentative d'intrusion dans un coffret électronique à des fins de rétro-ingénierie (« reverse engineering » en langage anglo-saxon) ou d'accès à des données sensibles.

Toutes les applications pour lesquelles on recherche une sécurité à l'échelle d'un composant électronique, d'un circuit électronique ou d'un système électronique sont envisageables.

### Technique antérieure

L'interconnexion et l'omniprésence des systèmes électroniques d'information ont fait naître des vulnérabilités qui ouvrent la voie à des attaques qui peuvent être coordonnées et complexes, menées parfois en quelques minutes seulement.

Un des problèmes à résoudre est celui de l'immunité des composants électroniques, à l'échelle unitaire, à l'échelle d'un circuit ou d'un système électronique vis-à-vis des attaques électromagnétiques, notamment par injection de fautes localisées dans le temps et dans l'espace et de l'amoindrissement de son rayonnement électromagnétique lorsqu'il est en fonctionnement et le couplage avec les composants par la génération d'une induction de brouillage au-dessus du circuit à protéger.

En particulier, les cartes à puce font l'objet de nombreuses tentatives de piratage, notamment par des attaques actives par injection de fautes, au cours desquelles le pirate potentiel perturbe physiquement le circuit intégré de la puce en vue de modifier le comportement de cette dernière et de dérouter le code logiciel vers un autre type d'exécution. En particulier, l'injection de rayons lumineux ou, plus généralement, d'ondes électromagnétiques (laser, lumière blanche, onde magnétique, etc.), perturbe le fonctionnement des composants électroniques et peut, par là même, introduire des failles dans le fonctionnement du logiciel chargé dans ces composants.

Pour résoudre ce type de problème, une solution connue consiste en un blindage passif du circuit électronique à protéger, obtenu par l'agencement de couches de protection passive, électriquement conductrices, par exemple des feuilles ou couches de cuivre d'épaisseur typiquement de quelques dizaines de microns ou de feuille ou couches de ferrite, appliquée au moyen d'adhésifs autour d'au moins une partie du circuit.

Par exemple, la demande de brevet WO2007/057325 propose en tant que dispositif de protection d'une puce électronique contre les attaques par injection de fautes, un matériau d'encapsulation de la puce qui présente des variations aléatoires d'indice de réfraction. Le matériau permet ainsi de déformer temporellement toute impulsion électromagnétique d'attaque, de façon à réduire sa localité temporelle. Un tel dispositif présente une efficacité relative dans la mesure où la protection est uniquement passive et ne permet pas de détecter une attaque et mettre en place une contre-mesure lors d'un fonctionnement critique de la puce à protéger durant lequel des opérations de chiffrement sont réalisées. Il n'est pas non plus en mesure de vérifier sa propre intégrité, c'est-à-dire qu'il n'est pas possible d'informer la puce à protéger de l'état d'usure du matériau d'encapsulation dans le cas où ce dernier subirait une abrasion mécanique ou chimique.

Une autre solution connue de protection est présentée dans la publication [1]. Il s'agit d'une méthode de protection contre les attaques dites par canaux cachés, aussi appelées par canaux auxiliaires (« side-channel attacks » en anglo-saxon) et injection de fautes en mettant en oeuvre un capteur à double bobine dont l'axe de sensibilité principal est orienté perpendiculairement au plan sur lequel est soudé le circuit à protéger. Lors de l'approche d'une sonde d'attaque à effet inductif, sa bobine dite bobine d'attaque et la bobine de détection agencée en surface du circuit électronique à protéger, se retrouvent dans le même plan, de sorte qu'une mutuelle inductance de valeur significative apparait et permet de coupler une partie du signal d'injection vers le capteur. Cette méthode est efficace pour détecter l'approche d'une sonde au-dessus de la puce électronique à protéger, en utilisant un oscillateur LC. Néanmoins, elle est probablement trop sensible, car elle ne propose ni blindage, ni de moyens destinés à réduire l'amplitude de l'induction magnétique, ni de contrôle de l'intégrité du dispositif de détection de l'attaque, de sorte que dans le cas d'attaques de forte intensité, la bobine de détection peut devenir une source de perturbation secondaire pouvant endommager, voire faire fauter le circuit électronique à protéger par induction dans les réseaux d'alimentation électrique du circuit. Elle ne propose pas non plus de moyen de contre-mesure par brouillage aléatoire des signaux, ni d'ailleurs de moyen de localisation de la position de la sonde d'attaque au-dessus du circuit à protéger. Les documents [2] et US 2015/351292 A1 constituent également un art antérieur pertinent.

Par conséquent, il existe un besoin d'améliorer les solutions de protection d'un système électronique à au moins un composant électronique, notamment contre les attaques électromagnétiques, et afin de pallier les inconvénients précités.

Un but de l'invention est de répondre, au moins partiellement à ce besoin.

### Exposé de l'invention

Pour ce faire, l'invention a tout d'abord pour objet un dispositif de protection et de supervision d'un système électronique comprenant au moins un composant électronique, tel qu'un circuit intégré (IC), notamment contre les attaques électromagnétiques, comprenant:
- un transformateur d'impulsions comprenant :
   une première feuille ou couche à base de poudre de ferrite magnétique, à appliquer sur au moins une surface du système électronique;
   au moins une bobine d'émission et au moins une bobine de réception entourant respectivement une première et une deuxième surface de la première feuille ou couche de ferrite, la première et la deuxième surface étant distantes l'une de l'autre,
- un étage d'émission relié à la bobine d'émission et adapté pour émettre des impulsions de courant électrique dans ladite bobine d'émission,
- un étage de réception relié à la bobine de réception et adapté pour détecter au moins l'amplitude de crête de la tension électrique engendrée par la force électromagnétique aux bornes de la bobine de réception,
- un microcontrôleur comprenant :
   au moins une entrée-sortie, reliée à l'étage d'émission pour déclencher les impulsions,
   un convertisseur analogique-numérique, relié à l'étage de réception pour informer le système électronique et/ou un autre microcontrôleur via un bus, des variations de l'amplitude de crête aux bornes de la bobine de réception.

Avantageusement, la première feuille ou couche de ferrite est en alliage d'oxyde de fer, de préférence choisi parmi un alliage Fe₂(Ni₁₋ₓZnₓ)O₄ ou Fe₂(Mn₁₋ₓZnₓ)O₄.

Avantageusement encore, la première feuille ou couche de ferrite présente une perméabilité magnétique complexe (µr=µ'-jµ") avec j²=-1, µ' supérieure à 1, typiquement comprise entre 40 et 125, jusqu'à au moins une fréquence égale à 1 kHz et de préférence jusqu'à au moins 10 MHz et µ" inférieure à 1, jusqu'à au moins une fréquence 1 kHz et de préférence jusqu'à au moins 10 MHz.

De préférence, l'épaisseur de la première feuille ou couche de ferrite étant comprise entre 50 µm et 500 µm.

De préférence encore, la poudre de ferrite magnétique de la première feuille ou couche a une perméabilité magnétique relative µr dont la variation est inférieure à 1% sur une plage de température comprenant au moins la gamme de températures de fonctionnement du système électronique.

La plage de température peut être comprise entre 0°C et 70°C lorsque le système électronique est destiné à des applications commerciales, ou entre -40°C et 85°C lorsque le système électronique est destiné à des applications industrielles, ou entre -55°C et 125°C lorsque le système électronique est destiné à des applications militaires.

Selon une variante de réalisation avantageuse, la bobine de réception comprend un nombre de spires supérieur à celui de la bobine d'émission. Cela permet de créer un effet transformateur élévateur de tension, en cas de perte magnétique et/ou de distance de transfert importantes.

Avantageusement, la bobine d'émission comprend un nombre de spires compris entre 1 et 10, de préférence 2 à 3 spires.

Avantageusement encore, la bobine de réception comprend un nombre de spires compris entre 1 et 10, de préférence 2 à 5 spires.

Selon un mode de réalisation avantageux, le dispositif comprend une deuxième feuille ou couche à base de ferrite empilée sur le dessus de la première feuille ou couche de ferrite, sans être entourée par les bobines d'émission et de réception. Avec cette deuxième feuille/couche de ferrite, le propre rayonnement de la première feuille/couche de ferrite est également diminué, cette deuxième feuille/couche opérant un blindage magnétique limitant la portée du champ de brouillage et limitant l'exposition aux champs magnétiques induits par le dispositif selon l'invention. Cette deuxième feuille/couche à fonction de blindage électromagnétique passif peut elle-même être recouverte par une feuille/couche métallique conductrice électriquement augmentant encore davantage le blindage du dispositif selon l'invention.

De préférence, l'épaisseur de cette deuxième feuille ou couche de ferrite est comprise entre 50 µm et 500 µm.

Selon un première mode de réalisation avantageuse, l'étage de réception comprend en tant que moyens de détection de l'amplitude de crête aux bornes de la bobine de réception, au moins une diode de redressement, un condensateur et un moyen de décharge du condenseur. Cette première variante est de préférence mise en oeuvre si la force électromotrice engendrée par le flux transitoire aux bornes de la bobine de réception dépasse la tension de coude d'une diode Schottky

Avantageusement, le moyen de décharge du condenseur est une résistance ou un transistor MOSFET à canal N court-circuitant le condensateur.

Selon une deuxième variante de réalisation avantageuse, l'étage de réception comprend en tant que moyen de détection de l'amplitude de crête aux bornes de la bobine de réception, un amplificateur opérationnel configuré en détecteur de crête. Cette deuxième variante est de préférence mise en oeuvre si la surtension de la bobine d'émission est faible et que le courant impulsionnel d'entrée est faible, le flux magnétique engendré dans la ferrite peut alors être également faible.

Selon un mode de réalisation avantageux, le dispositif comprend en outre au moins un film de matériau piézoélectrique ou pyroélectrique, polarisé dans le sens de son épaisseur, agencée au-dessus ou au-dessous de la première feuille ou couche de ferrite, l'étage de réception étant en outre adapté pour détecter l'amplitude crête de la tension engendrée aux bornes du film de matériau piézoélectrique ou pyroélectrique, le microcontrôleur comprenant en outre un convertisseur analogique-numérique (CANp), relié à l'étage de réception pour informer le système électronique et/ou l'autre microcontrôleur via un bus, des variations de l'amplitude de crête aux bornes du film de matériau piézoélectrique ou pyroélectrique.

De préférence, le film de matériau piézoélectrique ou pyroélectrique est un film de polyfluorure de vinylidène (PVDF) à faces principales métallisées constituant des électrodes.

Selon ce mode, et une première variante, l'étage de réception comprend avantageusement en tant que moyens de détection de l'amplitude de crête aux bornes du film de matériau piézoélectrique ou pyroélectrique, au moins une diode de redressement, un condensateur et un moyen de décharge du condenseur.

De préférence, le moyen de décharge du condenseur étant une résistance ou un transistor MOSFET à canal N court-circuitant le condensateur.

Selon ce mode, et une deuxième variante, l'étage de réception comprend en tant que moyen de détection de l'amplitude crête de la tension engendrée aux bornes du film de matériau piézoélectrique ou pyroélectrique, un amplificateur opérationnel configuré en détecteur de crête.

Ainsi, avec au moins un film de matériau piézoélectrique ou pyroélectrique, le dispositif selon l'invention constitue en outre un détecteur de tir laser pour l'injection de faute optique. Le film pyroélectrique/piézoélectrique mince et souple de quelques dizaines de microns d'épaisseur, constitue un capteur mince présentant une faible capacité intrinsèque que l'on connecte en parallèle avec la bobine de réception ou de façon isolée de la bobine de réception avec son propre amplificateur opérationnel en configuration détection de crête, ou sa propre diode de redressement et son condensateur réservoir.

Avantageusement, le(s) bus pour informer le système électronique et/ou l'autre microcontrôleur étant un(des) bus I2C ou UART, de préférence sécurisé(s) au moyen d'un algorithme de chiffrement symétrique (AES).

Selon encore un autre mode de réalisation avantageux, le microcontrôleur comprend deux entrée-sorties (Oi, Ob) distinctes, reliées à l'étage d'émission, l'une (Oi) étant dédiée pour déclencher des impulsions de contrôle d'intégrité de la feuille ou couche de ferrite, l'autre (Ob) étant dédiée pour déclencher des impulsions de brouillage électromagnétique. Cela permet d'optimiser la consommation de courant, détecter les attaques mécaniques et thermiques et réduire les effets délétères dus au propre rayonnement du dispositif selon l'invention.

Selon cet autre mode, le microcontrôleur comprend de préférence en outre un modulateur de largeur d'impulsions à activation aléatoire pour faire varier de manière aléatoire les largeurs d'impulsions de brouillage envoyées par l'étage d'émission.

Selon un autre mode de réalisation avantageux, la feuille ou couche de ferrite avec les bobines d'émission et de réception sont supportées par un support flexible, de préférence adhésif, à appliquer contre la surface du système électronique, le dispositif comprenant en outre une batterie d'alimentation électrique du microcontrôleur reliée à un et un régulateur de tension, de préférence à faible chute (LDO) adapté pour réguler la tension de la batterie à une tension stable (Vcc), le microcontrôleur comprenant en outre un convertisseur analogique-numérique de gestion de la charge batterie (CANvb). On obtient ainsi un dispositif autonome qui peut être implanté sur tout système électronique à protéger, existant ou nouveau.

Selon un autre mode de réalisation avantageux, le dispositif comprend en outre un photodétecteur dont le niveau seuil d'éclairage caractérise l'ouverture d'un coffret dans lequel se trouve le système électronique. Ce photodétecteur permet ainsi de renseigner d'une augmentation de luminosité ambiante correspondant à l'ouverture souhaitée ou non d'un coffret dans lequel se trouve le système électronique à protéger. En cas d'effraction, la détection d'un seuil dépassé de luminosité peut permettre le déclenchement d'une alarme.

L'invention a également pour objet un procédé de protection et de supervision d'un système électronique comprenant les étapes suivantes :
a/ mise en place du dispositif de protection qui vient d'être décrit dont l'application de la feuille ou couche à base de poudre de ferrite magnétique, sur au moins une surface du système électronique ;
b/ étalonnage du dispositif en réalisant une première mesure de l'amplitude crête aux bornes de la bobine de réception afin de déterminer une valeur de référence ;
c/ une fois l'étalonnage effectué, déclenchement d'au moins une interruption matérielle sur l'entrée-sortie (I/O) de sorte à détecter la valeur de l'amplitude crête effective et la comparer à la valeur de référence;
d/ si la comparaison à l'étape c/ entre la valeur effective et la valeur de référence correspond à une situation d'attaque alors déclenchement d'une alarme au système électronique et/ou un autre microcontrôleur.

l'étape c/ consistant en une répétition en boucle d'interruptions matérielles.
le microcontrôleur étant configuré de sorte que les impulsions de courant émises par l'étage d'émission du dispositif soient des impulsions de brouillage.
la cadence des impulsions de brouillage étant aléatoire, de préférence à une valeur proche ou sous multiple proche de la fréquence d'horloge du système électronique à superviser.
l'intensité des impulsions de brouillage ayant au moins deux valeurs, dont une, destinée à saturer tout circuit électronique d'attaque, est supérieure à l'intensité du rayonnement du système à superviser et l'autre est sensiblement égale à l'intensité du rayonnement du système à superviser.

Ainsi, l'invention consiste essentiellement en un dispositif de protection d'un système électronique, tel qu'un circuit intégré, intégrant un transformateur d'impulsions avec une feuille ou couche de ferrite à faibles pertes magnétiques recouvrant une surface du système électronique et entourée par deux bobines distantes l'une de l'autre et reliées l'une d'émission à un étage d'émission d'impulsions électriques et l'autre de réception à un étage de réception, le tout étant relié et piloté par un microcontrôleur.

La feuille de ferrite peut être appliquée de préférence par collage.

La couche de ferrite est issue d'un dépôt de particules de ferrite à densité variable.

De fait, au moins deux alternatives d'intégration peuvent être envisagées :
- soit un substrat à base d'adhésif revêtue d'une feuille ou couche de ferrite, qui forme un produit en tant que tel à appliquer;
- soit le dépôt ferromagnétique d'une couche dont la densité et l'épaisseur sont déterminées en fonction de la sensibilité de l'application cible du dispositif de protection.

La caractéristique ferromagnétique de la ferrite lui permet de garantir l'intégrité d'une protection en assurant la continuité du champ électromagnétique entre les bobines d'émission-réception.

De plus, le fait que la ferrite n'est pas électriquement conductrice donne l'avantage, lorsqu'elle est déposée directement sous forme d'une couche, de protéger les fils de connexion (« bondings » en anglais), contrairement à une couche en cuivre ou argent, comme selon l'état de l'art, qui nécessiterait le dépôt d'une couche de résine supplémentaire pour éviter les courts circuits.

Dans le cadre de l'invention, le microcontrôleur peut être un microcontrôleur indépendant ou un microcontrôleur propre au système électronique à protéger et superviser. Les deux microcontrôleurs peuvent être fusionnés en un seul et même microcontrôleur qui pilote le processus de supervision. Néanmoins, compte tenu de la complexification de l'approche sécuritaire, il peut être envisagé un troisième microcontrôleur en charge de gérer la stratégie de brouillage, de contrôle d'intégrité, de supervision de l'alimentation car ces fonctions peuvent s'avérer coûteuses en termes de temps machine. L'avantage important de déléguer la supervision à un microcontrôleur dédié est de pouvoir s'adapter sur un système électronique existant sans avoir à effectuer de lourdes modifications.

La feuille ou la couche est à base de poudre de ferrite frittée et sous la forme d'une feuille ou couche mince et rigide aimantable à faible champ coercitif, éventuellement friable ou cassante, apte à canaliser un flux magnétique large bande dans son épaisseur et dont l'une des faces est de préférence revêtue d'un adhésif afin de pouvoir être collée directement sur le système électronique à protéger. Par « large bande », on entend ici et dans le cadre de l'invention, des fréquences pouvant atteindre typiquement 10 MHz et jusqu'à 50 à 100 MHz pour les ferrites ayant les pertes les plus faibles.

La superficie de la feuille ou couche de ferrite est de préférence égale à la face supérieure du système à protéger, typiquement de l'ordre du centimètre carré, avec une épaisseur typiquement inférieure à 0,5 mm. Les tests effectués par les inventeurs ont montré l'efficacité de la feuille ou couche de ferrite à partir de 200 µm d'épaisseur ferromagnétique.

Les feuille ou couches de ferrite présentent intrinsèquement une isolation électrique élevée et des grains de ferrite qui peuvent être relativement non jointifs tout en conservant un effet de blindage significatif.

Avec des blindages métalliques selon l'état de l'art, il est préférable d'avoir une conductivité électrique maximale, afin de garantir une atténuation suffisante d'un champ électromagnétique incident traversant un blindage qui dépend néanmoins de la fréquence de travail et de l'épaisseur de peau qui en résulte.

Au contraire, les inventeurs ont observé qu'une des particularités des poudres de ferrites à base d'alliages d'oxyde de fer doux large bande, était que l'étendue spatiale du blindage créé par un grain de ferrite était bien supérieure à la taille de ce grain et qu'il était possible de réaliser des résines polymères chargées en grains de ferrite produisant une atténuation significative ou une canalisation significative d'un flux magnétique malgré la dispersion des grains de ferrite dans la résine polymère.

De cette constatation, les inventeurs ont envisagé des couches de blindage qui peuvent être plus ou moins chargées en poudre de ferrite de préférence frittée sur une couche d'adhésif et qui permettent de réaliser des transformateurs d'impulsions large bande à canalisation de flux et perte magnétique contrôlées.

Une réalisation avantageuse correspond au cas où les grains de ferrite, en général de dimension unitaire caractéristique comprise entre 50 et 300 µm, sont jointifs par frittage haute température et constituent alors une feuille ou couche rigide mince, friable et cassante.

Une telle feuille ou couche de ferrite est avantageusement mise en oeuvre dans le dispositif selon l'invention en tant que moyen de contrôle d'intégrité, car il suffit d'une fissure pour que le flux magnétique transféré dans l'épaisseur de la feuille ou couche soit notablement diminué et permette de caractériser une agression physique ou une tentative de démontage du dispositif une fois appliquée (collée) sur le système électronique à protéger.

De manière générale, chaque impulsion de courant engendre un flux magnétique transitoire qui est transféré de la bobine d'émission à la bobine de réception à travers la feuille ou couche de ferrite. Les faibles pertes de la feuille ou couche de ferrite permettent en effet de transférer le flux magnétique sur une distance suffisante pour couvrir toute la surface du système électronique à protéger et le rendent détectable d'un bout à l'autre de la surface.

L'existence des pertes permet de pouvoir localiser par une méthode différentielle, une sonde d'attaque qui est amenée au-dessus de la feuille ou couche de ferrite et qui engendre un signal d'amplitude différent selon qu'il est plus ou moins proche de l'une ou l'autre des deux bobines. Plus la sonde d'attaque est proche d'une des bobines et plus la force électromotrice engendrée aux bornes de la bobine est grande, de sorte que l'on peut dégager une relation entre une différence de tensions entre les deux bobines et la position de la sonde d'attaque.

La force électromotrice qui apparait aux bornes de la bobine de réception est traitée par l'étage de réception qui a principalement pour fonction de fournir l'amplitude de crête du signal aux bornes de la bobine de réception à un convertisseur analogique-numérique du microcontrôleur.

Le système électronique est informé par l'intermédiaire d'un bus lorsqu'une perturbation significative de l'amplitude de crête est détectée.

En outre, des impulsions spécifiques de brouillage peuvent être injectées dans la feuille ou couche de ferrite.

De manière générale, les tensions d'attaques dangereuses, c'est-à-dire susceptibles de faire fauter un système électronique à protéger, produisent des tensions de sortie bien supérieures à celles mesurées aux bornes de la bobine de réception pendant le fonctionnement de supervision. Il n'y a donc pas d'erreur possible de détection.

Autrement dit, le dispositif selon l'invention peut distinguer la différence entre une amplitude crête normale correspondant à une valeur attendue aux bornes de sortie de l'étage de réception, le cas échéant en tenant compte de la température, et une amplitude crête d'un signal de sortie en situation d'attaque.

En cas d'attaque par injection de fautes, le dispositif selon l'invention peut réaliser une interruption matérielle du microcontrôleur, éventuellement sécurisée par chiffrement, de sorte à informer le système électronique à protéger.

Les impulsions de brouillage réalisées lors de phases sensibles avec éventuellement des leurres peuvent être adaptées en conséquence et le système électronique à protéger peut également modifier ses procédures selon une stratégie qui lui est propre.

Contrairement aux solutions selon l'état de l'art, le dispositif selon l'invention et le procédé de supervision afférent permettent à la fois de réaliser un blindage du système électronique, un contrôle actif d'intégrité d'une part du système électronique et d'autre part du dispositif en lui-même et un brouillage électromagnétique actif.

Le contrôle actif permet de détecter la présence d'une sonde d'attaque à ferrite, des attaques par injection de faute. Il est en particulier possible de détecter les surtensions provoquées par un équipement d'attaque à spires inductives orientées ne serait-ce que très partiellement dans l'axe de sensibilité maximale du dispositif.

Le brouillage permet de parer aux attaques par canaux cachés, aussi appelés par canaux auxiliaires.

Dans un mode avantageux, l'ajout d'un film de matériau piézoélectrique ou pyroélectrique au-dessus ou au-dessous de la feuille ou couche de ferrite permet de donner des fonctionnalités supplémentaires de protection au dispositif selon l'invention.

Ainsi, en cas d'attaque par laser ou par contrainte mécanique ponctuelle statique ou vibratoire ou par choc pyroélectrique, une force électromotrice apparait aux bornes du film et est détectée afin d'informer le système électronique à protéger et/ou un autre microcontrôleur.

Les avantages de l'invention sont nombreux parmi lesquels on peut citer :
- un dispositif unique combinant des fonctionnalités de blindage, de contrôle d'intégrité à la fois du système électronique à protéger et du dispositif en lui-même, et de brouillage électromagnétique contre les écoutes intempestives et avantageusement de protection contre les attaques par laser, chocs thermiques et mécaniques ou, encore par tentative d'intrusion dans le coffret logeant le système électronique;
- une grande compacité du dispositif selon l'invention avec notamment de faibles dimensions du transformateur d'impulsions relativement au système électronique à protéger de la solution proposée,
- une faible consommation électrique permettant une supervision autonome permanente y compris lorsque le système électronique à protéger est hors tension,
- un faible nombre de broches d'émissions/réceptions requises pour le fonctionnement,
- un contrôle/supervision rapide,
- la possibilité de commercialiser le dispositif selon l'invention sous la forme d'un équipement autonome dont le transformateur d'impulsions (feuille ou couche de ferrite entourée des bobines d'émission et de réception) peut être appliqué de préférence par collage facilement et rapidement sur un nouveau système électronique ou un système existant ou le coffret d'un tel système.

D'autres avantages et caractéristiques ressortiront mieux à la lecture de la description détaillée, faite à titre illustratif et non limitatif, en référence aux figures suivantes.

### Brève description des dessins

[Fig 1] la figure 1 est une représentation schématique montrant un exemple de dispositif de protection et de supervision d'un circuit intégré, selon l'invention.
[Fig 2] la figure 2 est une représentation schématique montrant un dispositif intégrant plusieurs modes de réalisation avantageux.
[Fig 3] la figure 3 est un schéma électrique montrant les différents composants électriques d'un exemple de dispositif selon l'invention sans son microcontrôleur.
[Fig 4] la figure 4 est un diagramme bloc des séquences du procédé de supervision selon l'invention tel qu'il est mis en oeuvre par le microcontrôleur du dispositif.
[Fig 5] la figure 5 illustre sous forme de courbes les signaux mesurés respectivement à la grille du transistor MOFSET de la bobine d'émission, à la bobine de réception et aux bornes du condensateur de l'étage de réception du dispositif selon la figure 3
[Fig 6] la figure 6 illustre sous forme de courbe la décroissance temporelle de la tension aux bornes du condensateur de l'étage de réception du dispositif selon la figure 3.
[Fig 7] la figure 7 illustre sous forme de courbes les signaux électriques respectivement à la bobine d'émission et à la bobine de réception du transformateur d'impulsions du dispositif selon la figure 3, avec un premier exemple de feuille à base de poudre de ferrite.
[Fig 8] la figure 8 illustre sous forme de courbes les signaux électriques respectivement à la bobine d'émission et à la bobine de réception du transformateur d'impulsions du dispositif selon la figure 3, avec un deuxième exemple de feuille à base de poudre de ferrite.
[Fig 9] la figure 9 illustre sous forme de courbes les signaux électriques respectivement à la bobine d'émission et à la bobine de réception du transformateur d'impulsions du dispositif selon la figure 3, avec un troisième exemple de feuille à base de poudre de ferrite
[Fig 10] la figure 10 illustre sous forme de courbes l'évolution de la tension aux bornes du condensateur de l'étage de réception du dispositif selon la figure 3, en fonction de l'état de dégradation d'une feuille ou couche de ferrite conforme à l'invention.
[Fig 11] la figure 11 est une reproduction photographique d'une feuille ou couche de ferrite ayant subi une rupture totale.
[Fig 12] la figure 12 illustre sous forme de courbes les signaux mesurés respectivement à la grille du transistor MOFSET de la bobine d'émission, à la bobine de réception et aux bornes du condensateur de l'étage de réception du dispositif selon la figure 3, lors d'une attaque par une sonde d'injection électromagnétique sans tirs d'impulsions.
[Fig 13] la figure 13 illustre sous forme de courbes la dérive des signaux à la bobine de réception en fonction de la température de l'environnement auquel est soumise la feuille ou couche de ferrite.
[Fig 14] la figure 14 illustre sous forme de courbes le signal mesuré aux bornes du condensateur de l'étage de réception du dispositif selon la figure 3, et renvoyé par le convertisseur analogique-numérique lors d'une attaque par une sonde d'injection électromagnétique avec tirs d'impulsions.
[Fig 15] la figure 15 illustre sous forme de courbe le signal enregistré par une sonde d'écoute normalement utilisée pour synchroniser une attaque avec un code en cours d'exécution, qui est brouillée par le dispositif de supervision selon l'invention.

### Description détaillée

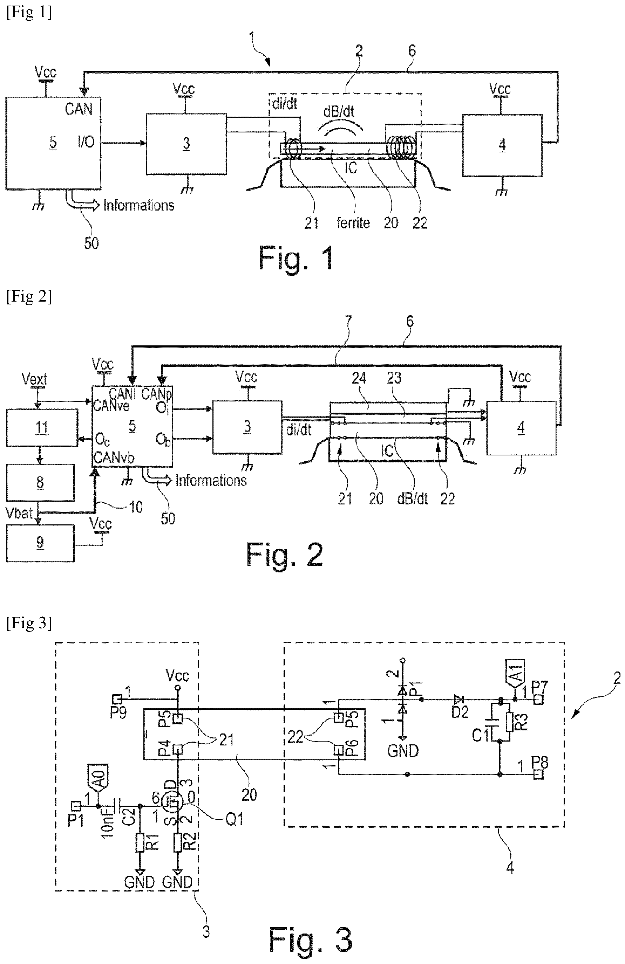

On a représenté en figure 1 un exemple de dispositif 1 de protection et de supervision d'un circuit intégré (IC) à protéger. Comme détaillé par la suite, un tel dispositif permet à la fois un blindage du système, un contrôle d'intégrité simultané du circuit intégré et du dispositif en lui-même et un brouillage.

Le dispositif comprend tout d'abord un transformateur d'impulsions 2 constitué d'une feuille ou couche à base de poudre de ferrite magnétique 20, d'une bobine d'émission 21 et d'une bobine de réception 22 distante de la bobine d'émission.

Les bobines 21, 22 entourent chacune une surface de la feuille ou couche de ferrite 20 au niveau de l'une de ses extrémités longitudinales.

De préférence, la feuille ou couche de ferrite magnétique 20 a une épaisseur comprise entre 50 et 500µm, est en alliage d'oxyde de fer, et présente une perméabilité magnétique complexe (µr=µ'-jµ") avec j²=-1, µ' supérieure à 1, typiquement comprise entre 40 et 125, jusqu'à au moins une fréquence égale à 1 kHz et de préférence jusqu'à au moins 10 MHz et µ" inférieure à 1, jusqu'à au moins une fréquence 1 kHz et de préférence jusqu'à au moins 10 MHz.

La bobine de réception 22 a de préférence plus de spires que la bobine d'émission 21. Cela permet de compenser les pertes magnétiques et/ou les distances de transfert importantes en créant en quelque sorte un transformateur élévateur de tension. Typiquement, la bobine d'émission 21 est constituée par un nombre de deux spires tandis que celle de réception 22 a quatre spires.

La feuille ou couche de ferrite 20 est collée ou déposée directement sur la surface supérieure du circuit intégré (IC) à protéger.

La bobine d'émission 21 est reliée à un étage d'émission 3 adapté pour émettre des impulsions de courant électrique.

La bobine de réception 22 est reliée quant à elle à un étage de réception 4 adapté pour détecter au moins l'amplitude de crête de la tension électrique engendrée par la force électromagnétique aux bornes de la bobine de réception 22.

Le dispositif 1 comprend en outre un microcontrôleur 5 de pilotage comprenant au moins une entrée-sortie (I/O) reliée à l'étage d'émission 3 et un convertisseur analogique-numérique (CAN) relié à l'étage de réception 4.

Le fonctionnement du dispositif est le suivant.

L'entrée-sortie (I/O) déclenche des impulsions de courant de l'étage d'émission 3 dans la bobine d'émission 21. Les impulsions émises sont de préférence réalisées régulièrement et de façon aléatoire.

Une impulsion de courant engendre un flux magnétique transitoire qui est transféré à la bobine de réception 22 à travers la feuille ou couche de ferrite 20.

La force électromotrice qui apparait aux bornes de la bobine de réception 22 est détectée par l'étage de réception 4 afin de fournir l'amplitude de crête du signal émis depuis la bobine de réception 22 au convertisseur CAN par un port matériel 6.

Lorsque des variations significatives de l'amplitude de crête sont détectées, une alarme peut être déclenchée et le microcontrôleur 5 informe le circuit intégré (IC) via un bus 50.

Le bus 50 est de préférence un bus I2C, c'est-à-dire un bus série synchrone bidirectionnel half-duplex.

Les variations significatives d'amplitude de crête peuvent tout d'abord être générées par n'importe quel défaut d'intégrité de la feuille ou couche de ferrite. En effet, celle-ci étant friable, dès l'apparition d'une microfissure engendrée par une tentative de décollement du dispositif, une baisse du flux magnétique est générée et par-là une diminution de l'amplitude crête du signal de sortie, c'est-à-dire aux bornes de la bobine de réception 22.

Également, une attaque par injection de fautes électromagnétique par une sonde d'attaque va réaliser un couplage du flux magnétique de cette dernière avec la feuille ou couche de ferrite 20, ce qui va générer des variations importantes du signal dans la bobine de réception 22.

Par ailleurs, l'activation d'un flux magnétique transitoire important au sein de la feuille ou couche de ferrite 20 réalise un brouillage de tout équipement d'écoute de l'activité électrique du circuit intégré (IC) et évite qu'un tel équipement ne puisse parvenir à casser les sécurités du circuit intégré (IC), notamment ses clefs de chiffrement.

Une batterie principale rechargeable permet un fonctionnement autonome du dispositif 1 selon l'invention. On peut prévoir une batterie de secours ou des condensateurs de découplage de valeur suffisamment élevée pour qu'en cas de défaillance ou de déconnexion brutale de la batterie principale, un message de défaut de la tension batterie principale soit activé.

La figure 2 montre un dispositif 1 amélioré, afin de réduire les effets induits par son propre rayonnement, d'optimiser la consommation de courant, de détecter les attaques par laser, mécaniques et/ou thermiques.

Tout d'abord, une feuille ou couche de ferrite supplémentaire 23 est empilée au-dessus de la feuille ou couche de ferrite 20 lorsqu'on souhaite limiter le propre rayonnement de cette dernière. On réalise ainsi un blindage magnétique limitant la portée du champ de brouillage et limitant l'exposition aux champs magnétiques induits par le transformateur d'impulsions 2. Cette feuille ou couche de ferrite supplémentaire 23 peut elle-même être recouverte par une feuille ou couche métallique conductrice électriquement augmentant encore le blindage électromagnétique.

Par ailleurs, un film de matériau piézoélectrique ou pyroélectrique 24, polarisé dans le sens de son épaisseur, est agencé au-dessus ou au-dessous de la feuille ou couche de ferrite 20. Le film 24 peut être un film de PVDF (polyfluorure de vinylidène) avec ses deux faces principales métallisées. En outre, ce film 24 complète le blindage magnétique du dispositif 1 par un blindage à conduction électrique.

Comme montré en figure 2, le film 24 est agencé de préférence au-dessus de la feuille ou couche de ferrite 20 de façon à ce que ses faces métallisées limitent la portée du champ de brouillage électromagnétique engendré par la feuille ou couche de ferrite 20.

Ce film 24 constitue un moyen de détection d'une attaque par impulsion laser, d'un choc thermique ou d'une attaque mécanique.

Pour ce faire, le fil 24 est relié à l'étage de réception 4 qui peut détecter l'amplitude crête de la tension engendrée aux bornes du film de matériau piézoélectrique ou pyroélectrique 24 et le microcontrôleur 5 est doté d'un convertisseur analogique-numérique supplémentaire (CANp), relié à l'étage de réception par un port matériel supplémentaire 7. L'architecture de l'étage de réception 4 pour cette détection est la même que pour la détection de l'amplitude crête aux bornes de la bobine de réception 22, comme expliqué ci-après en relation avec un exemple détaillé de la figure 3.

Le système électronique à protéger est donc également informé, via le bus 50, des variations de l'amplitude de crête aux bornes du film de matériau piézoélectrique ou pyroélectrique.

Une autre amélioration du dispositif consiste à réaliser une séparation des fonctions entre d'une part la supervision, c'est-à-dire de contrôle de l'intégrité de la feuille ou couche de ferrite 20 et donc du circuit intégré à protéger, et d'autre part le brouillage.

Pour ce faire, on met en oeuvre dans le microcontrôleur 5, une entrée-sortie supplémentaire : ainsi comme symbolisé en figure 2, l'entrée-sortie Oi permet de réaliser la commande des impulsions de vérification de l'intégrité, tandis que l'entrée-sortie Ob est dédiée à la commande d'impulsions de brouillage. Cette entrée-sortie supplémentaire Ob permet également de réduire la consommation d'énergie électrique pour cette fonction de brouillage.

Toutes les améliorations du dispositif 1 résumées ci-dessus et illustrées en figure 2, le rendent plus complexe et plus cher, mais lui permettent de répondre davantage aux normes de protection contre les rayonnements non ionisants, quand cela s'avère requis.

Une amélioration supplémentaire du dispositif 1 selon l'invention consiste à prévoir des moyens pour l'alimenter électriquement en permanence et qu'il soit autonome en énergie de façon à ne pas permettre son démontage et sa neutralisation lorsqu'il est hors tension.

Pour ce faire, le dispositif 1 comprend tout d'abord une batterie principale 8 dont la tension Vbat est régulée à une tension d'alimentation stable (Vcc) au moyen d'un régulateur de tension 9, typiquement un régulateur connu sous l'appellation anglo-saxonne « *Low-Dropout*» (LDO). L'alimentation stable est fournie au moyen d'un port 10, à un convertisseur analogique-numérique (CANvb) implanté dans le microcontrôleur 5 et donc dédié à la gestion de la charge de batterie. La tension de batterie (Vbat) est normalement lentement décroissante avec le courant consommé, sauf en cas d'attaque du fil batterie. Dans ce cas, une alarme de défaut de tension batterie est activée et le circuit (IC) à protéger peut être informé.

Le microcontrôleur 5 supervise également les défauts de la tension de la batterie (Vbat) ainsi que sa charge et sa décharge en fonction d'une tension extérieure (Vext) disponible et délivrée au chargeur de batterie 11. Lorsqu'une source de tension extérieure (Vext) est branchée et détectée par un convertisseur analogique-numérique (CANve) dédié dans le microcontrôleur 5. Également, une entrée-sortie (Oc) dédiée au chargeur 11 est prévue dans le microcontrôleur 5.

La tension stable (régulée) (Vcc) s'appuie sur des condensateurs de découplage de valeur suffisamment élevée pour que la durée de la période de contrôle de la tension de batterie (Vbat) soit inférieure au temps de décharge de la tension régulée par coupure du fil d'alimentation de la tension de batterie vers le régulateur 9. Dans ce cas, en cas de défaut de la tension batterie, un message d'alerte de défaut de tension batterie est activé.

On décrit maintenant en référence avec la figure 3, un exemple de réalisation avantageux du circuit électrique d'un dispositif 1 selon l'invention sans son microcontrôleur 5.

Dans ce schéma, on précise que le symbole « Vcc » correspond à l'alimentation électrique stable fournie, « GND » désigne la masse du circuit électrique du dispositif, « P1 » à « P9 » les broches de connexion électrique, «A0» la tension d'entrée aux bornes de l'étage d'émission 3, «A0» correspond au signal engendré par l'entrée-sortie (I/O) du microcontrôleur 5, « A1 » la tension de sortie aux bornes de l'étage de réception 4.

Dans l'exemple indiqué, la feuille ou couche de ferrite 20 est une feuille ou couche déjà commercialisée sous la référence commerciale MSLL12060-000 de la société LAIRD, d'épaisseur 200 µm avec un adhésif d'épaisseur 75 µm avec feuille ou couche de protection pelliculable qui est déposé sur l'une des faces de la feuille ou couche de ferrite.

La bobine d'émission 21 et celle de réception 22 sont chacune constituées de 2 ou 3 spires d'un fil de cuivre émaillé de diamètre 40 µm. Les spires de la bobine d'émission 21 et de celle de réception 22 enveloppent la feuille ou couche de ferrite 20 à quelques millimètres de distance, respectivement à une extrémité longitudinale et l'autre de la feuille ou couche 20.

Pour générer une émission d'un flux magnétique transitoire à l'étage d'émission 3, une impulsion logique de contrôle est engendrée par une broche d'entrée-sortie I/O du microcontrôleur 5 programmée en sortie.

Cette impulsion est appliquée sur la grille d'un transistor Q1, de type MOSFET canal N, après avoir subi un filtrage passe-haut constitué par deux composants passifs, condensateur C2 et résistance R1. Ce filtrage passe-haut constitue une sécurité en limitant le temps pendant lequel le transistor Q1 est rendu passant et absorbe un courant élevé qui peut atteindre plusieurs ampères.

Le drain du transistor Q1 est connecté à l'une des broches P4 de la bobine d'émission 21, tandis que l'autre broche P3 de la bobine est directement connectée à la tension d'alimentation Vcc. Une forte variation de courant est alors engendrée dans la bobine d'émission 21 à l'ouverture et à la fermeture du transistor Q1 marquant le début et la fin de l'impulsion, ce qui engendre un flux magnétique transitoire dans la feuille ou couche de ferrite 20. Cette forte variation de courant en quelques nanosecondes engendre une surtension notable dans la bobine d'émission 21. Elle peut atteindre 20 volts et présente l'avantage de ne pas nécessiter d'amplificateur à la sortie de la bobine de réception 22 pour réaliser une détection d'amplitude crête passive par la diode de redressement D2 et le condensateur réservoir C1 de l'étage de réception 4 comme détaillé ci-après.

La bobine de réception 22 reçoit le flux magnétique transitoire et produit une force électromotrice qui alimente l'étage de réception 4.

Si la surtension de la bobine d'émission 21 est faible et que le courant impulsionnel d'entrée est faible, le flux magnétique engendré dans la feuille ou couche de ferrite 20 peut être également faible et dans ce cas, on peut envisager d'agencer un amplificateur opérationnel de sortie configuré en détecteur de crête (non représenté). L'utilisation d'un tel amplificateur opérationnel augmente certes le nombre de composants et la complexité du circuit, mais il présente l'intérêt de limiter l'intensité du flux transitoire nécessaire aux fonctions de supervision et de brouillage du dispositif selon l'invention et donc limite le niveau d'exposition à des champs haute fréquence.

Dans le cas contraire, si la force électromotrice engendrée par le flux transitoire aux bornes de la bobine de sortie dépasse la tension de coude d'une diode Schottky, il est possible de réaliser une détection de crête avec seulement deux composants passifs illustrés en figure 3, à savoir une diode de redressement D2 et un condensateur réservoir C1.

Entre la bobine de réception 22 et la diode de redressement D2, deux diodes de protection D1 sont montées en série, afin de limiter les éventuelles surtensions positives ou négatives de réception qui seraient provoquées par une attaque par effet inductif. Ainsi, grâce à ces deux diodes D1, ces surtensions se vident respectivement dans l'alimentation Vcc et la masse du circuit.

Lorsque le signal de réception atteint une valeur de tension suffisante, supérieure à la tension de coude de la diode de redressement D2, il apparait une tension continue aux bornes du condensateur réservoir C1.

Ce condensateur C1 se vide continuellement dans une résistance de fuite R3 dont la valeur est suffisamment haute pour que le temps de décharge soit grand devant le temps d'échantillonnage de la tension apparaissant aux bornes du condensateur C1.

Typiquement, la constante de temps de décharge est de l'ordre de la centaine de microsecondes, tandis que le temps d'échantillonnage et de mesure par le convertisseur analogique-numérique (CAN, CANi) de la tension aux bornes du condensateur est de l'ordre de la microseconde. Il est possible de réduire le temps de décharge du condensateur en remplaçant la résistance de charge R3 par un transistor MOSFET canal N (non représenté), dont la source serait connectée à la masse et le drain connecté en A1, sa tension de grille étant portée à une tension supérieure à sa tension de seuil pendant le temps nécessaire à la décharge du condensateur. Ce temps de décharge peut ainsi être réduit à bien moins qu'une microseconde. Mais en contrepartie cela nécessite une entrée-sortie (I/O) de contrôle supplémentaire.

La tension A1 qui apparait aux bornes du condensateur C1 est représentative du couplage entre les bobines d'émission 21 et de réception 22 et permet aussi de capter les variations de champ magnétique B qui ont lieu au-dessus de la feuille ou couche de ferrite 20. La mesure se fait via le convertisseur analogique numérique (CAN, CANi) du microcontrôleur 5.

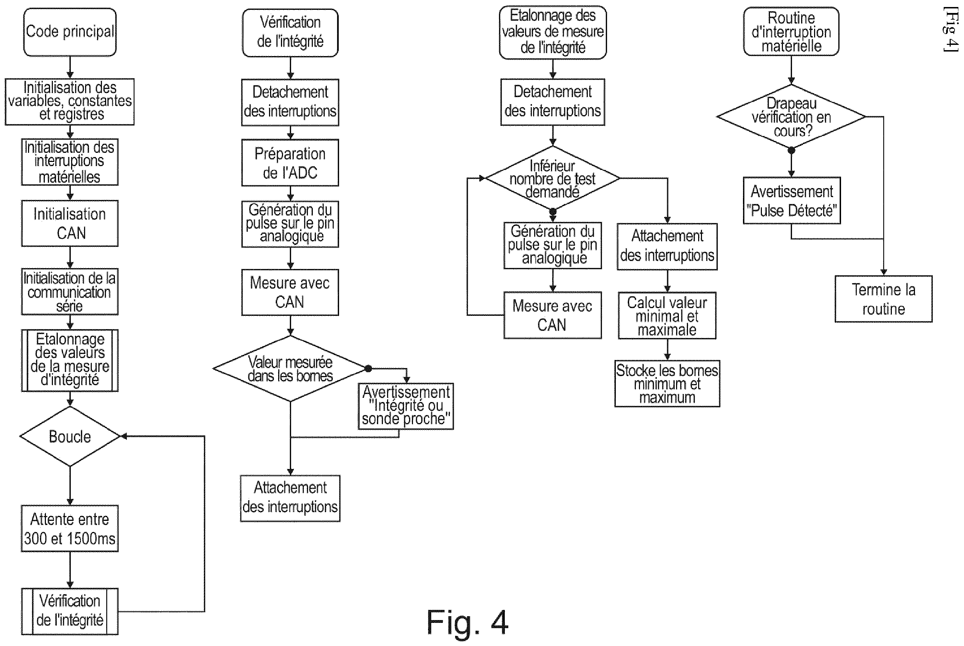

La figure 4 est un diagramme bloc du programme de contrôle d'intégrité de la feuille ou couche de ferrite 20 du circuit électrique illustré en figure 3 et détection d'injection de fautes par induction.

Ce programme consiste à vérifier régulièrement l'intégrité, mais à des instants choisis aléatoirement et pouvant entre outre être très fréquents en phase de brouillage électro magnétique. Lorsqu'une sonde d'attaque produit une tension de sortie aux bornes du condensateur C1, une routine d'interruption matérielle permet de détecter l'amplitude crête d'une impulsion électromagnétique. Cette information peut être gérée directement par le circuit intégré (IC) à protéger, s'il dispose du nombre d'entrées-sorties suffisantes et d'un microcontrôleur. Ici, et de manière privilégiée, le microcontrôleur 5 du dispositif 1 est indépendant et le bus 50, de type I2C avec chiffrement avancé (AES), permet une communication sécurisée avec le circuit (IC) à protéger. Dans une variante, On pourra remplacer le bus I2C par un bus UART de préférence en full duplex.

Comme illustré sur cette figure 4, le code principal s'exécute avec une phase d'initialisation et une boucle infinie. Dans la phase d'initialisation, on déclare les données, les interruptions matérielles, le convertisseur analogique-numérique (CAN) et la liaison série.

Ensuite, une phase d'étalonnage démarre avec une première mesure du signal de sortie que l'on enregistre et qui constitue une valeur de référence pour le test d'intégrité. Cela suppose que le dispositif 1 est dans un environnement électromagnétique nominal au démarrage. Lorsque la feuille ou couche de ferrite 20 est appliquée contre le circuit intégré (IC) à protéger, l'environnement sous-jacent à la ferrite est de nature à modifier la valeur de référence dans le test de supervision. Cette phase d'étalonnage est ainsi réalisée la toute première fois dès que la feuille ou couche de ferrite 20 est appliquée contre le circuit (IC) à protéger et la valeur de référence est sauvegardée en mémoire.

Une routine d'interruption matérielle est démarrée si l'on détecte des variations de tension au niveau de la bobine de réception 4.

Si une telle variation est décelée mais pas à la suite d'un test d'intégrité, on considère que c'est le fait d'une perturbation extérieure, i.e. une impulsion électromagnétique qui est signalée en tant que telle.

Le programme entre alors dans une boucle qui vérifie l'intégrité de la feuille ou couche de ferrite 20 régulièrement mais avec un délai de répétition aléatoire ainsi qu'une largeur d'impulsion définissant l'appel de courant aléatoire dans la bobine d'émission 21. Cette fonction consiste à déclencher des interruptions matérielles avec un temps aléatoire qui déclenche l'impulsion sur la grille du transistor Q1 et une mesure du signal reçu aux bornes du condensateur C1. Cette valeur est comparée à la valeur de référence stockée en mémoire après la phase d'étalonnage, afin de signaler ou non une altération de l'intégrité du dispositif 1.

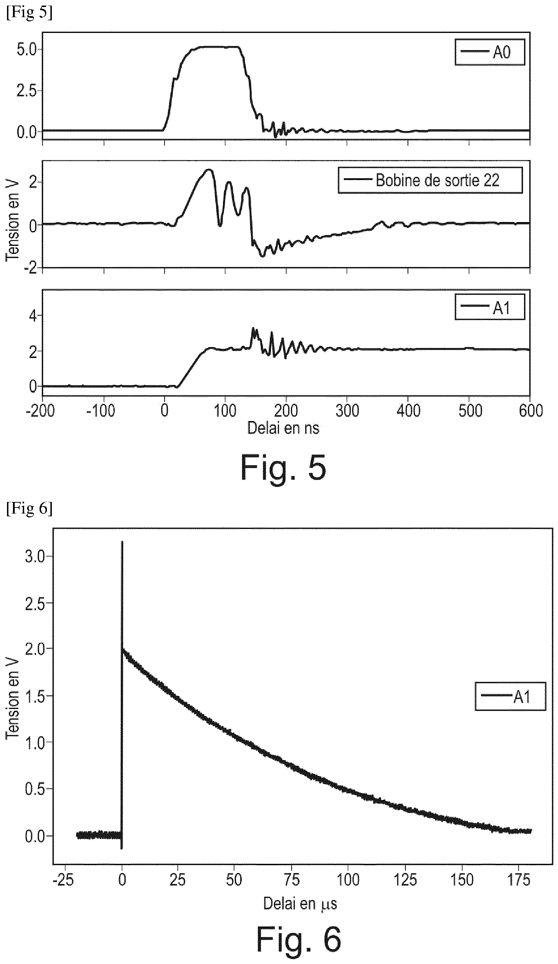

La figure 5 illustre respectivement le signal de commande (A0) de la tension de grille du transistor Q1 de la bobine d'émission 3, la tension aux bornes P5, P6 de la bobine de réception 4, le signal (A1) aux bornes du condensateur réservoir C1 échantillonné par le convertisseur analogique-numérique (CAN, CANi) du microcontrôleur 5.

On précise ici que le microcontrôleur utilisé 5 est commercialisé sous la dénomination ATmega328.

Il ressort de ces courbes, qu'on arrive à mesurer un signal de l'ordre de 2.1V par rapport à une référence de tension de 5V, le microcontrôleur ATmega328 5 renvoyant des valeurs numériques quantifiées sur 10 bits, comprises entre 400 et 420 qui sont représentatives de la tension de 2.1V.

La figure 6 montre le temps de décroissance, de l'ordre de 100 µs, de la tension aux bornes du condensateur réservoir C1 après l'émission d'une impulsion de contrôle d'intégrité. Ce temps limite la cadence de mesure. On peut envisager de réduire ce temps en agençant dans l'étage de réception 4 un transistor de décharge court-circuitant le condensateur C1.

Les inventeurs se sont intéressés à l'influence de la composition de la feuille ou couche de ferrite 20 sur les signaux reçus à la bobine de réception 4 et donc sur la détection de l'amplitude de crête recherchée.

Pour cela, ils ont évalué les pertes par dilution de la poudre de ferrite dans un substrat isolant. A cette fin, des échantillons ont été préparés par mélange de poudre de ferrite et de colle mono composant très fluide d'une part, de poudre de ferrite et de résine époxy bi-composants plus visqueuse d'autre part.

Les résultats obtenus avec ces échantillons ont ensuite été comparés à ceux obtenus avec une feuille ou couche de ferrite frittée, rigide, munie d'un adhésif. Cette feuille ou couche de ferrite rigide est une feuille ou couche commercialisée sous la référence MSLL12060-000 du constructeur LAIRD, initialement destinée au blindage et guidage des lignes de champ dans les applications de communication en champ proche (« Near Field Communications »).

Deux bobines d'émission 21 et de réception 4 chacune d'un nombre de trois spires sont placées aux extrémités d'un échantillon de ferrite.

Un signal carré d'amplitude égale à 1V est injecté dans la bobine d'émission 21 et on mesure le signal reçu sur la bobine de réception 22.

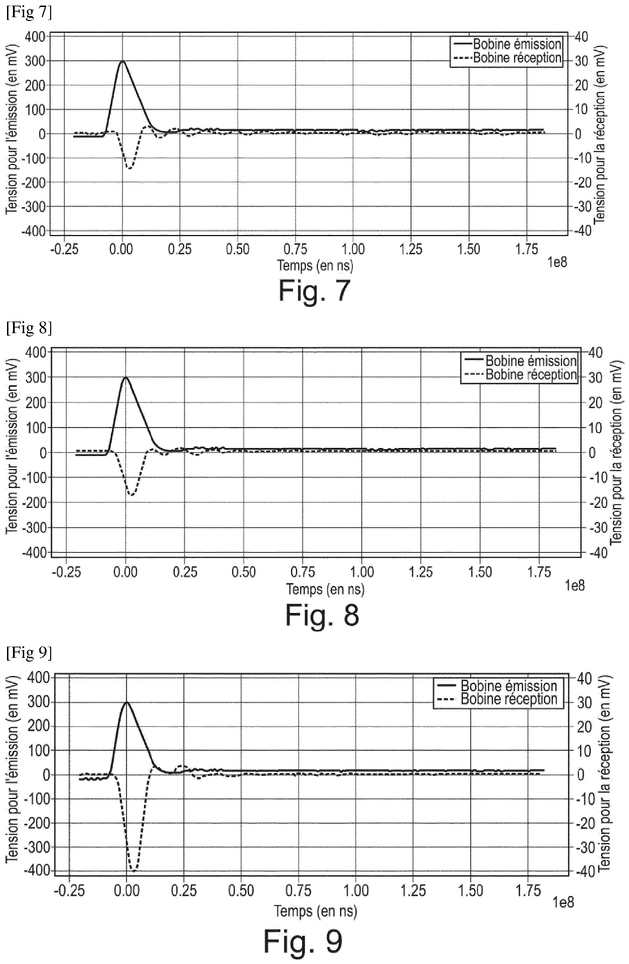

Les figures 7, 8 et 9 montrent chacune le signal électrique mesuré aux bornes respectivement de la bobine d'émission (traits pleins) et de réception (traits pointillés) pour les échantillons respectifs suivants :
- un mélange d'une résine époxy et d'une poudre de ferrite doux, large bande, en alliage Ni-Zn, type M de la société National Magnetics avec une permittivité µr initiale égale à 40. La résine époxy est relativement visqueuse ce qui réduit la possibilité d'augmenter le taux de charge en poudre. Les grains de ferrite ont une dimension caractéristique de 125 µm.
- un mélange d'une colle fluide commercialisée sous la dénomination Loctite 407 (faible viscosité et haute température) et d'une poudre de ferrite, large bande, en alliage Ni-Zn, type M de la société National Magnetics avec une permittivité µr initiale égale à 40. La densité de charge en poudre est supérieure à celle que l'on obtient avec l'échantillon avec résine époxy mais inférieure à celle de la feuille ou couche frittée rigide.
- une feuille ou couche de ferrite frittée d'épaisseur 200 µm déposée sur une bande adhésive d'épaisseur 75 µm.

En fonction des échantillons, on obtient des maximums de tension respectivement de 12mV, 20mV et 35mV. La feuille ou couche de ferrite frittée déposée sur bande adhésive, qui est la plus dense en ferrite, la plus rigide et la plus cassante produit donc le signal le plus fort. L'aspect friable d'une feuille ou couche frittée introduit un critère de non démontabilité une fois qu'elle est appliquée (collée) sur le circuit électronique à protéger.

Néanmoins, on constate que les deux mélanges avec résine époxy et colle produisent des signaux de réception exploitables et constituent donc des variantes potentielles en tant que feuille ou couche de ferrite 20 à appliquer sur un circuit électronique à protéger.

Les inventeurs ont également évalué l'évolution de la tension de sortie aux bornes du condensateur C1 en fonction de l'état de dégradation d'un feuille ou couche de ferrite 20, frittée et rigide.

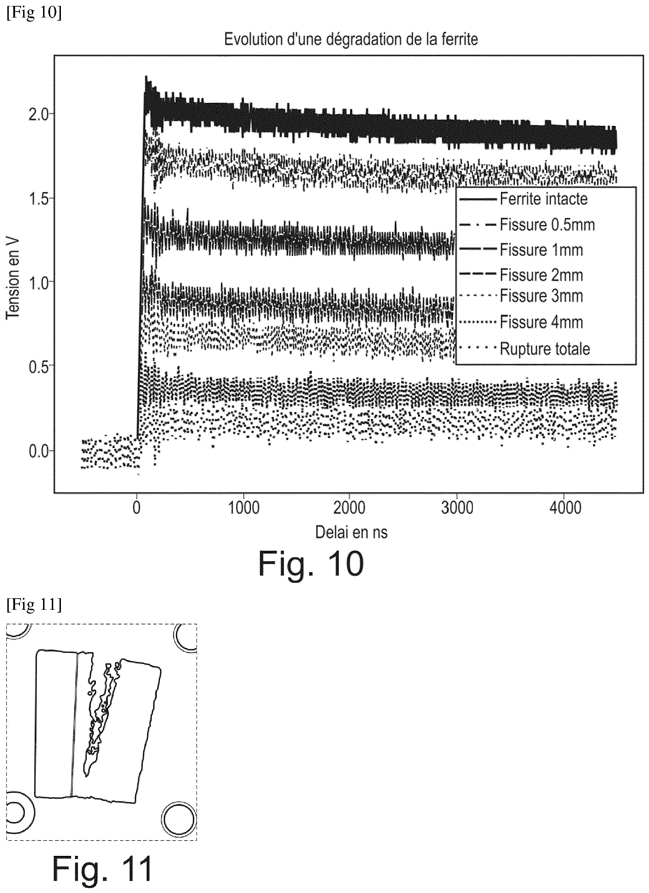

Cette évolution est montrée en figure 10. On constate que la chute de la tension de sortie augmente au fur et à mesure que les entailles dans la feuille ou couche de ferrite 20 augmentent car elles réduisent de fait la surface de couplage du flux entre les bobines d'émission 3 et de réception 4. En cas de trou/casse de la ferrite, comme montré sur la figure 11, le champ magnétique est moins bien transmis entre les deux bobines 3, 4 et la tension aux bornes de la bobine est réduite. Ceci montre bien que le flux magnétique couvre toute la surface de la feuille ou couche de ferrite frittée et donc tout circuit électronique à protéger qui serait sous-jacent.

Cela prouve aussi que la mesure de l'amplitude de crête du signal en sortie de bobine de réception 4 permet de détecter une dégradation plus ou moins avancée de ladite feuille ou couche 20.

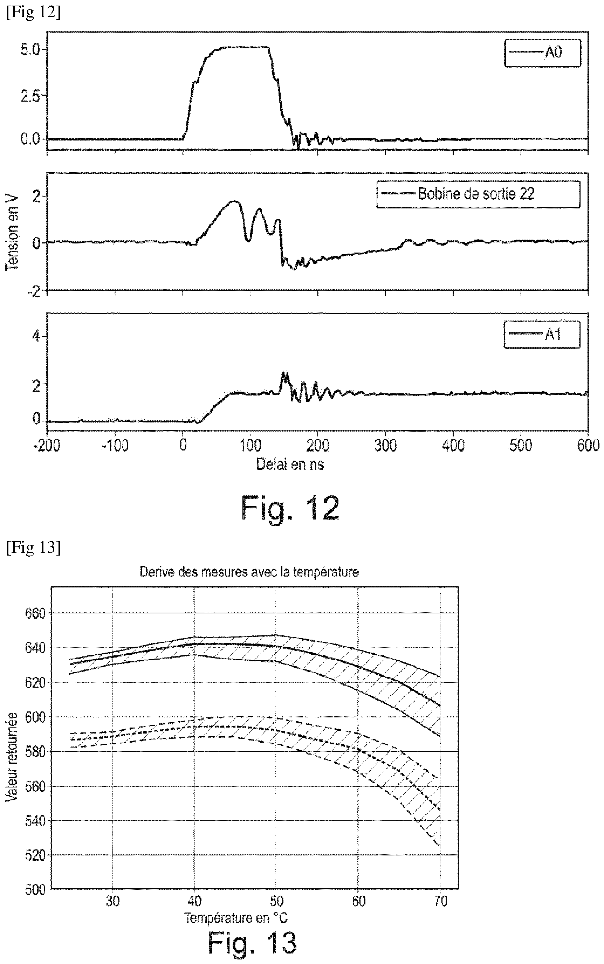

La figure 12 illustre respectivement le signal (A0) de la tension de grille du transistor Q1 de la bobine d'émission 3, la tension aux bornes P5, P6 de la bobine de réception 4, le signal (A1) aux bornes du condensateur réservoir C1 échantillonné par le convertisseur analogique-numérique (CAN, CANi) du microcontrôleur 5, suite à l'attaque par approche d'une sonde d'injection électromagnétique en sortie de bobine de réception 4, sans qu'aucun tir ne soit réalisé.

La sonde utilisée est constituée d'une tige de ferrite de diamètre 2 mm commercialisée par la société Fair-Rite, sous la dénomination matériau type 67.

On constate que le signal aux bornes de la bobine de réception 4 présente une tension abaissée à environ 1,4V.

L'approche d'une sonde d'écoute, de type de celle commercialisée sous la dénomination Langer RF2 U 5-2 est également détectée efficacement.

En revanche, l'approche d'une sonde d'écoute sans ferrite, telle que celle commercialisée sous la dénomination la Langer RF3 B0,3-3, n'est pas détectée.

Tous les tests d'intégrité précédemment décrits ont été effectués à température ambiante (25°C). Des tests à différentes températures ont été effectués pour contrôler la plage de fonctionnement du dispositif 1 selon l'invention.

La figure 13 illustre la limite de détection de la présence d'une sonde d'attaque avec ferrite en fonction de la température. Plus précisément, cette figure 13 donne les valeurs en sortie retournées, du convertisseur (CAN) du microcontrôleur 5 en fonction de la température à laquelle est soumis le dispositif 1. On précise que pour ce test, le nombre de spires de la bobine de réception 4 a été augmenté, de sorte que la quantification de l'amplitude de crête du signal de sortie avait une valeur nominale quantifiée sur 10 bits valant 630.

La courbe en traits pleins représente la distribution du signal en fonction de la température et en situation de fonctionnement normal, c'est-à-dire sans attaque, tandis que la courbe en traits pointillés représente la distribution du signal en présence d'une sonde d'attaque. Cette sonde d'attaque est constituée d'une tige de ferrite de diamètre 2 mm, à cinq spires, commercialisée par la société Fair-Rite, sous la dénomination matériau type 67. Aucun tir n'est réalisé, la sonde étant juste amenée au contact sur le dessus de la feuille ou couche de ferrite.

De cette figure 13, on remarque tout d'abord qu'il y a une influence de la température, mais que cette évolution est faible, de l'ordre de quelques pourcents et monotone sur une plage de température assez élevée.

On constate également que l'on peut discriminer la présence d'une sonde d'attaque jusqu'à une certaine température se situant au voisinage de 65°C. Au-delà, le système de supervision n'est plus suffisamment discriminant sur une seule acquisition et sans effectuer de calcul de valeur moyenne.

En revanche, lorsqu'une correction en température est appliquée et qu'une valeur moyenne est calculée sur une centaine de mesures qui ne nécessitent pas plus de 10 ms, alors il est tout à fait possible de continuer à discriminer la présence de la sonde d'attaque avec ferrite jusqu'à des températures au-moins aussi élevées que celles admissibles par le circuit électronique à protéger.

Par conséquent, cette figure 13 montre que le dispositif de supervision selon l'invention peut être efficient sur toute la plage de température de fonctionnement prévue pour le circuit intégré (IC) à protéger. Bien que la ferrite utilisée pour le test soit déjà satisfaisante, la feuille ou couche 20 du dispositif pourra être avantageusement réalisée avec des ferrites dont les propriétés magnétiques évoluent peu, variant typiquement de moins de 1%, sur les plages classiques de température de fonctionnement, c'est-à-dire entre 0°C et 70°C pour des applications commerciales, entre -40°C et +85°C pour des applications industrielles et entre -55°C et +125°C pour des applications militaires.

Pour valider l'effet du blindage passif engendré par la présence d'une feuille ou couche de ferrite, les inventeurs ont réalisé des tests en appliquant une feuille ou couche de ferrite frittée sur un microcontrôleur de type ATMega manipulant des registres, en tant que composant électronique à protéger. Les inventeurs ont constaté au préalable qu'il est possible de faire fauter ce composant électronique à partir d'une valeur de 100V lorsqu'il n'est pas protégé et qu'une sonde d'attaque à bobine d'injection est disposée à 3mm au-dessus de son packaging.

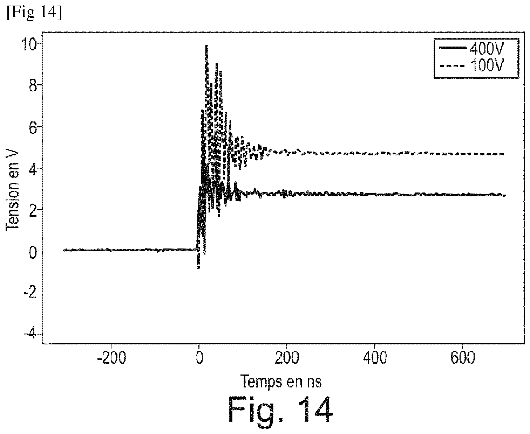

Les résultats comparatifs avec une protection par feuille ou couche de ferrite sont montrés sur la figure 14. La sonde d'attaque utilisée est constituée d'une tige de ferrite de diamètre 2 mm, à cinq spires, commercialisée par la société Fair-Rite, sous la dénomination matériau type 67, avec des tirs d'impulsions pour deux valeurs différentes de tension d'attaque, respectivement 100V et 400V.

On constate que le dispositif 1 de supervision selon l'invention parvient à déceler des tensions d'attaque à partir de 80V, et qu'en présence de la feuille ou couche de ferrite, ces tensions d'attaque ne sont pas en mesure de faire fauter le microcontrôleur à protéger, en particulier en créant des fautes de décalage temporel des processus logiques.

La feuille ou couche de ferrite constitue donc un blindage passif efficace contre les injections de faute, pouvant en outre servir à déceler les attaques et leur niveau d'intensité par l'étage de réception 4, par mesure de la tension aux bornes du condensateur C1.

Pour évaluer l'efficacité du blindage passif d'une feuille ou couche de ferrite frittée contre une attaque par écoute de l'activité électromagnétique par canaux auxiliaires (« Side-Channel »), d'autres tests ont été réalisés en appliquant la feuille ou couche de ferrite frittée sur un microcontrôleur de type ATmega328 manipulant un chiffrement AES, en tant que composant électronique à protéger.

Les inventeurs ont constaté que sans blindage passif par la feuille ou couche de ferrite, et sans brouillage, la clé de cryptage du microcontrôleur ATmega328 est trouvée en 35 acquisitions, tandis qu'en présence de la feuille ou couche de ferrite, il faut une plus forte amplification du signal d'au moins 20 dB et sept fois plus d'acquisitions pour trouver la clef de cryptage.

Avec un brouillage et avec une cadence de répétition d'impulsions élevée, par exemple 200 kHz, ou avec la présence d'une feuille ou couche de ferrite plus épaisse, il est encore plus difficile de trouver la clef de cryptage.

Par conséquent, sans qu'il soit utile de quantifier l'effet de protection obtenu, on peut conclure que le temps nécessaire pour réussir une attaque devient dissuasif pour un attaquant.

Tous les tests présentés ci-avant ont été réalisés avec des impulsions dont le besoin en courant n'est important que durant chaque impulsion. Ce dernier étant très bref, de l'ordre du dixième de microseconde, il en résulte que le courant moyen est très faible et que l'ensemble du dispositif 1 selon l'invention peut être alimenté de façon autonome par une batterie rechargeable 8 de quelques mA.h seulement et peut fonctionner même lorsque le circuit à protéger n'est pas sous-tension. Le dispositif selon l'invention peut alors émettre des impulsions à une cadence plus faible afin de vérifier par exemple l'intégrité de la feuille ou couche de ferrite ou que le coffret dans lequel se trouve le circuit à protéger n'est pas ouvert. En cas d'attaque, le dispositif 1 modifie un paramètre d'intégrité, par exemple une valeur de registre du microcontrôleur 5 transmise au circuit à protéger pour l'informer d'une attaque ou d'une tentative d'intrusion.

La stratégie de brouillage consiste à brouiller lorsque c'est nécessaire, c'est-à-dire lorsqu'un code critique pour la sécurité est en cours d'exécution, mais également lorsque ce n'est pas nécessaire afin de ne pas informer l'attaquant de l'importance de l'activité sous-jacente.

En outre, la cadence de brouillage peut être égale ou sous multiple de la fréquence d'horloge du circuit à protéger de façon à ce que le bruit de phase et la densité spectrale de puissance du rayonnement du circuit à protéger et du dispositif 1 occupent le même espace des fréquences. Cela permet d'avoir un courant impulsionnel d'intensité plus faible que celui lors d'un contrôle d'intégrité et donc de réduire la consommation électrique moyenne.

Les impulsions de brouillage peuvent être définies comme des trames de n bits, n pouvant varier entre 1 et 1024, ayant un contenu aléatoire et une fréquence de commutation identique à celle du circuit à protéger. Enfin, l'intensité du brouillage peut avoir au moins deux valeurs, l'une très forte de façon à saturer tout circuit d'écoute, l'autre de même niveau que l'intensité du rayonnement du circuit à protéger.

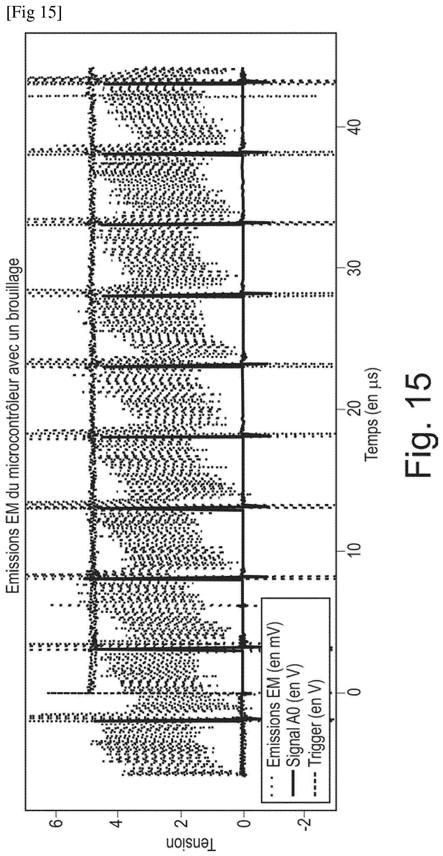

La figure 15 montre l'intensité du brouillage pour une valeur forte, engendrant un rayonnement plus élevée, environ 1000 fois plus que celui du rayonnement du circuit à protéger. Le signal a été enregistré par une sonde d'écoute. Le signal de brouillage engendré par la feuille ou couche de ferrite 20 atteint ici plusieurs volts, tandis que le signal d'écoute issu du circuit à protéger n'est que de quelques millivolts. L'intensité du brouillage est donc très élevée et est en mesure de saturer la sonde d'écoute durant l'émission des impulsions de brouillage.

D'autres avantages et améliorations pourront être apportés sans pour autant sortir du cadre de l'invention.

L'invention n'est pas limitée aux exemples qui viennent d'être décrits; on peut notamment combiner entre elles des caractéristiques des exemples illustrés au sein de variantes non illustrées.

### Liste des références citées

[1] : Naofumi Homma et al. « EM Attack Is Non-Invasive ?- Design Methodology and Validity Vérification of EM Attack Sensor », LNCS vol. 8731.Springer-Verlag (2014).
[2]: Mathieu Dumont: "Modélisation de l'injection de faute électromagnétique sur circuits intégrés sécurisés et contre-mesures", PhD thesis, Chapitre 4. Université Montpellier (2020).

## Revendications

1. Dispositif (1) de protection et de supervision d'un système électronique comprenant au moins un composant électronique, tel qu'un circuit intégré (IC), notamment contre les attaques électromagnétiques, comprenant :
- un transformateur d'impulsions (2) comprenant :
une première feuille ou couche à base de poudre de ferrite magnétique (20), à appliquer sur au moins une surface du système électronique;
au moins une bobine d'émission (21) et au moins une bobine de réception (22) entourant respectivement une première et une deuxième surface de la première feuille ou couche de ferrite, la première et la deuxième surface étant distantes l'une de l'autre,
- un étage d'émission (3) relié à la bobine d'émission et adapté pour émettre des impulsions de courant électrique dans ladite bobine d'émission,
- un étage de réception (4) relié à la bobine de réception et adapté pour détecter au moins l'amplitude de crête de la tension électrique engendrée par la force électromagnétique aux bornes de la bobine de réception,
- un microcontrôleur (5) comprenant :
au moins une entrée-sortie (I/O, Oi, Ob) reliée à l'étage d'émission pour déclencher les impulsions,
un convertisseur analogique-numérique (CAN, CANp), relié à l'étage de réception pour informer le système électronique et/ou un autre microcontrôleur via un bus (50), des variations de l'amplitude de crête aux bornes de la bobine de réception.

2. Dispositif (1) selon la revendication 1, la première feuille ou couche de ferrite étant en alliage d'oxyde de fer, de préférence choisi parmi un alliage Fe₂(Ni₁₋ₓZnₓ)O₄ ou Fe₂(Mn₁₋ₓ Znₓ)O₄, et de préférence,
présentant une perméabilité magnétique complexe (µr=µ'-jµ") avec j²=-1, µ' supérieure à 1, typiquement comprise entre 40 et 125, jusqu'à au moins une fréquence égale à 1 kHz et de préférence jusqu'à au moins 10 MHz et µ" inférieure à 1, jusqu'à au moins une fréquence 1 kHz et de préférence jusqu'à au moins 10 MHz.

3. Dispositif (1) selon l'une des revendications précédentes, la poudre de ferrite magnétique de la première feuille ou couche ayant une perméabilité magnétique relative µr dont la variation est inférieure à 1% sur une plage de température comprenant au moins la gamme de températures de fonctionnement du système électronique,
la plage de température étant de préférence comprise entre 0°C et 70°C lorsque le système électronique est destiné à des applications commerciales, ou entre -40°C et 85°C lorsque le système électronique est destiné à des applications industrielles, ou entre -55°C et 125°C lorsque le système électronique est destiné à des applications militaires.

4. Dispositif (1) selon l'une des revendications précédentes, comprenant une deuxième feuille ou couche à base de ferrite empilée sur le dessus de la première feuille ou couche de ferrite, sans être entourée par les bobines d'émission et de réception.

5. Dispositif (1) selon l'une des revendications précédentes, l'étage de réception comprenant en tant que moyens de détection de l'amplitude de crête aux bornes de la bobine de réception, au moins une diode de redressement, un condensateur et un moyen de décharge du condenseur.
le moyen de décharge du condenseur étant de préférence une résistance ou un transistor MOSFET à canal N court-circuitant le condensateur.

6. Dispositif (1) selon l'une des revendications 1 à 4, l'étage de réception comprenant en tant que moyen de détection de l'amplitude de crête aux bornes de la bobine de réception, un amplificateur opérationnel configuré en détecteur de crête.

7. Dispositif (1) selon l'une des revendications précédentes, comprenant en outre au moins un film de matériau piézoélectrique ou pyroélectrique, polarisé dans le sens de son épaisseur, agencée au-dessus ou au-dessous de la première feuille ou couche de ferrite, l'étage de réception étant en outre adapté pour détecter l'amplitude crête de la tension engendrée aux bornes du film de matériau piézoélectrique ou pyroélectrique, le microcontrôleur (5) comprenant en outre un convertisseur analogique-numérique (CANp), relié à l'étage de réception pour informer le système électronique et/ou l'autre microcontrôleur via un bus (50), des variations de l'amplitude de crête aux bornes du film de matériau piézoélectrique ou pyroélectrique,
le film de matériau piézoélectrique ou pyroélectrique étant de préférence un film de polyfluorure de vinylidène (PVDF) à faces principales métallisées constituant des électrodes.

8. Dispositif (1) selon la revendication 7, l'étage de réception comprenant en tant que moyens de détection de l'amplitude de crête aux bornes du film de matériau piézoélectrique ou pyroélectrique, au moins une diode de redressement, un condensateur et un moyen de décharge du condenseur,
le moyen de décharge du condenseur étant de préférence une résistance ou un transistor MOSFET à canal N court-circuitant le condensateur.

9. Dispositif (1) selon la revendication 7, l'étage de réception comprenant en tant que moyen de détection de l'amplitude crête de la tension engendrée aux bornes du film de matériau piézoélectrique ou pyroélectrique, un amplificateur opérationnel configuré en détecteur de crête.

10. Dispositif (1) selon l'une des revendications précédentes, le(s) bus (50) pour informer le système électronique et/ou l'autre microcontrôleur étant un(des) bus I2C ou UART, de préférence sécurisé(s) au moyen d'un algorithme de chiffrement symétrique (AES).

11. Dispositif (1) selon l'une des revendications précédentes, le microcontrôleur comprenant deux entrée-sorties (Oi, Ob) distinctes, reliées à l'étage d'émission, l'une (Oi) étant dédiée pour déclencher des impulsions de contrôle d'intégrité de la feuille ou couche de ferrite (20), l'autre (Ob) étant dédiée pour déclencher des impulsions de brouillage électromagnétique.
le microcontrôleur comprenant en outre de préférence un modulateur de largeur d'impulsions à activation aléatoire pour faire varier de manière aléatoire les largeurs d'impulsions de brouillage envoyées par l'étage d'émission.

12. Dispositif (1) selon l'une des revendications précédentes, la feuille ou couche de ferrite avec les bobines d'émission et de réception étant supportées par un support flexible, de préférence adhésif, à appliquer contre la surface du système électronique, le dispositif comprenant en outre une batterie d'alimentation électrique du microcontrôleur reliée à un et un régulateur de tension, de préférence à faible chute (LDO) adapté pour réguler la tension de la batterie à une tension stable (Vcc), le microcontrôleur comprenant en outre un convertisseur analogique-numérique de gestion de la charge batterie (CANvb).

13. Dispositif (1) selon l'une des revendications précédentes, comprenant en outre un photodétecteur dont le niveau seuil d'éclairage caractérise l'ouverture d'un coffret dans lequel se trouve le système électronique.

14. Procédé de protection et de supervision d'un système électronique comprenant les étapes suivantes :
a/ mise en place du dispositif de protection selon l'une des revendications précédentes dont l'application de la feuille ou couche à base de poudre de ferrite magnétique (20), sur au moins une surface du système électronique ;
b/ étalonnage du dispositif en réalisant une première mesure de l'amplitude crête aux bornes de la bobine de réception afin de déterminer une valeur de référence ;
c/ une fois l'étalonnage effectué, déclenchement d'au moins une interruption matérielle sur l'entrée-sortie (I/O) de sorte à détecter la valeur de l'amplitude crête effective et la comparer à la valeur de référence;
d/ si la comparaison à l'étape c/ entre la valeur effective et la valeur de référence correspond à une situation d'attaque alors déclenchement d'une alarme au système électronique et/ou un autre microcontrôleur,
l'étape c/ consistant de préférence en une répétition en boucle d'interruptions matérielles, le microcontrôleur étant de préférence configuré de sorte que les impulsions de courant émises par l'étage d'émission du dispositif soient des impulsions de brouillage.

15. Procédé selon la revendication 14, la cadence des impulsions de brouillage étant aléatoire, de préférence à une valeur proche ou sous multiple proche de la fréquence d'horloge du système électronique à superviser,
l'intensité des impulsions de brouillage ayant de préférence, au moins deux valeurs, dont une, destinée à saturer tout circuit électronique d'attaque, est supérieure à l'intensité du rayonnement du système à superviser et l'autre est sensiblement égale à l'intensité du rayonnement du système à superviser.

## Patentansprüche

1. Vorrichtung (1) zum Schutz und zur Überwachung eines elektronischen Systems, das mindestens ein elektronisches Bauteil wie eine Leiterplatte (IC) enthält, insbesondere gegen elektromagnetische Angriffe, die enthält:
- einen Impulswandler (2), der enthält:
eine erste Folie oder Schicht auf der Basis von magnetischem Ferritpulver (20), die auf mindestens eine Fläche des elektronischen Systems aufzubringen ist;
mindestens eine Sendespule (21) und mindestens eine Empfangsspule (22), die eine erste bzw. eine zweite Fläche der ersten Ferritfolie oder -schicht umgeben, wobei die erste und die zweite Fläche voneinander entfernt sind,
- eine Sendestufe (3), die mit der Sendespule verbunden und geeignet ist, Stromimpulse in die Sendespule zu senden,
- eine Empfangsstufe (4), die mit der Empfangsspule verbunden und geeignet ist, mindestens die Spitzenamplitude der elektrischen Spannung zu erkennen, die von der elektromagnetischen Kraft an den Anschlüssen der Empfangsspule erzeugt wird,
- einen Mikrocontroller (5), der enthält:
mindestens einen Eingang-Ausgang (I/O, Oi, Ob), der mit der Sendestufe verbunden ist, um die Impulse auszulösen,
einen Analog-Digital-Wandler (CAN, CANp), der mit der Empfangsstufe verbunden ist, um das elektronische System und/oder einen anderen Mikrocontroller über einen Bus (50) über die Änderungen der Spitzenamplitude an den Anschlüssen der Empfangsspule zu informieren.

2. Vorrichtung (1) nach Anspruch 1, wobei die erste Ferritfolie oder -schicht aus Eisenoxid-Legierung ist, die vorzugsweise unter einer Fe₂(N₁₋ₓZnₓ,)O₄₋ oder Fe₂(Mn₁₋ₓZnₓ)O₄-Legierung ausgewählt wird und vorzugsweise eine komplexe magnetische Permeabilität (µr=µ'-jµ") hat, mit j²=-1, µ' größer als 1, typischerweise zwischen 40 und 125, bis zu mindestens einer Frequenz gleich 1 kHz und vorzugsweise bis mindestens 10 MHz, und µ" kleiner als 1, bis zu mindestens einer Frequenz 1 kHz und vorzugsweise bis zu mindestens 10 MHz.

3. Vorrichtung (1) nach einem der vorhergehenden Ansprüche, wobei das magnetische Ferritpulver der ersten Folie oder Schicht eine relative magnetische Permeabilität µr hat, deren Änderung geringer als 1% in einem Temperaturbereich ist, der mindestens die Palette von Betriebstemperaturen des elektronischen Systems enthält,
wobei der Temperaturbereich vorzugsweise zwischen 0°C und 70°C, wenn das elektronische System für kommerzielle Anwendungen bestimmt ist, oder zwischen -40°C und 85°C, wenn das elektronische System für industrielle Anwendungen bestimmt ist, oder zwischen -55°C und 125°C liegt, wenn das elektronische System für militärische Anwendungen bestimmt ist.

4. Vorrichtung (1) nach einem der vorhergehenden Ansprüche, die eine zweite Folie oder Schicht auf der Basis von Ferrit enthält, die auf die Oberseite der ersten Ferritfolie oder -schicht gestapelt ist, ohne von den Sende- und Empfangsspulen umgeben zu sein.

5. Vorrichtung (1) nach einem der vorhergehenden Ansprüche, wobei die Empfangsstufe als Erkennungseinrichtungen der Spitzenamplitude an den Anschlüssen der Empfangsspule mindestens eine Gleichrichterdiode, einen Kondensator und eine Entladungseinrichtung des Kondensers enthält,
wobei die Entladungseinrichtung des Kondensers vorzugsweise ein Widerstand oder ein N-Kanal-MOSFET-Transistor ist, der den Kondensator kurzschließt.

6. Vorrichtung (1) nach einem der Ansprüche 1 bis 4, wobei die Empfangsstufe als Erkennungseinrichtung der Spitzenamplitude an den Anschlüssen der Empfangsspule einen als Spitzendetektor konfigurierten Operationsverstärker enthält.

7. Vorrichtung (1) nach einem der vorhergehenden Ansprüche, die außerdem mindestens einen Film aus piezoelektrischem oder pyroelektrischem Material enthält, polarisiert in Richtung seiner Dicke, angeordnet über oder unter der ersten Ferritfolie oder -schicht, wobei die Empfangsstufe außerdem geeignet ist, die Spitzenamplitude der an den Anschlüssen des Films aus piezoelektrischem oder pyroelektrischem Material erzeugten Spannung zu erkennen, wobei der Mikrocontroller (5) außerdem einen Analog-Digital-Wandler (CANp) enthält, der mit der Empfangsstufe verbunden ist, um das elektronische System und/oder den anderen Mikrocontroller über einen Bus (50) über die Änderungen der Spitzenamplitude an den Anschlüssen des Films aus piezoelektrischem oder pyroelektrischem Material zu informieren,
wobei der Film aus piezoelektrischem oder pyroelektrischem Material vorzugsweise ein Polyvinylidenfluoridfilm (PVDF) mit metallisierten Hauptseiten ist, die Elektroden bilden.

8. Vorrichtung (1) nach Anspruch 7, wobei die Empfangsstufe als Erkennungseinrichtungen der Spitzenamplitude an den Anschlüssen des Films aus piezoelektrischem oder pyroelektrischem Material mindestens eine Gleichrichterdiode, einen Kondensator und eine Entladungseinrichtung des Kondensers enthält, wobei die Entladungseinrichtung des Kondensers vorzugsweise ein Widerstand oder ein N-Kanal-MOSFET-Transistor ist, der den Kondensator kurzschließt.

9. Vorrichtung (1) nach Anspruch 7, wobei die Empfangsstufe als Erkennungseinrichtung der Spitzenamplitude der an den Anschlüssen des Films aus piezoelektrischem oder pyroelektrischem Material erzeugten Spannung einen als Spitzendetektor konfigurierten Operationsverstärker enthält.

10. Vorrichtung (1) nach einem der vorhergehenden Ansprüche, wobei der Bus (die Busse) (50) zur Information des elektronischen Systems und/oder des anderen Mikrocontrollers ein Bus (Busse) I2C oder UART ist/sind, vorzugsweise gesichert mittels eines symmetrischen Verschlüsselungsalgorithmus (AES).

11. Vorrichtung (1) nach einem der vorhergehenden Ansprüche, wobei der Mikrocontroller zwei mit der Sendestufe verbundene, unterschiedliche Eingänge-Ausgänge (Oi, Ob) enthält, wobei der eine (Oi) dazu bestimmt ist, Integritätskontrollimpulse der Ferritfolie oder -schicht (20) auszulösen, der andere (Ob) dazu bestimmt ist, elektromagnetische Störimpulse auszulösen, wobei der Mikrocontroller außerdem vorzugsweise einen Impulsbreitenmodulator mit Zufallsaktivierung enthält, um die von der Sendestufe gesendeten Störimpulsbreiten zufällig variieren zu lassen.

12. Vorrichtung (1) nach einem der vorhergehenden Ansprüche, wobei die Ferritfolie oder -schicht mit den Sende- und Empfangsspulen von einem biegsamen, vorzugsweise haftenden Träger getragen wird, der auf die Fläche des elektronischen Systems aufzubringen ist, wobei die Vorrichtung außerdem eine Stromversorgungsbatterie des Mikrocontrollers enthält, die mit einem Spannungsregler vorzugsweise mit geringem Abfall (LDO) verbunden ist, der geeignet ist, die Spannung der Batterie auf eine stabile Spannung (Vcc) zu regeln, wobei der Mikrocontroller außerdem einen Analog-Digital-Wandler zur Verwaltung der Batterieladung (CANvb) enthält.

13. Vorrichtung (1) nach einem der vorhergehenden Ansprüche, die außerdem einen Photodetektor enthält, dessen Beleuchtungsschwellenwert die Öffnung eines Kastens kennzeichnet, in dem sich das elektronische System befindet.

14. Verfahren zum Schutz und zur Überwachung eines elektronischen Systems, das die folgenden Schritte enthält:
a/ Einsetzen der Schutzvorrichtung nach einem der vorhergehenden Ansprüche, darunter das Aufbringen der Folie oder Schicht auf der Basis von magnetischem Ferritpulver (20) auf mindestens eine Fläche des elektronischen Systems;
b/ Kalibrieren der Vorrichtung mittels Durchführen einer ersten Messung der Spitzenamplitude an den Anschlüssen der Empfangsspule, um einen Bezugswert zu bestimmen;
c/ nach dem Ausführen der Kalibrierung, Auslösen mindestens eines Hardware-Interrupts am Eingang-Ausgang (I/O), um den effektiven Wert der Spitzenamplitude zu erkennen und ihn mit dem Bezugswert zu vergleichen;
d/ wenn der Vergleich im Schritt c/ zwischen dem effektiven Wert und dem Bezugswert einer Angriffssituation entspricht, Auslösen einer Warnung an das elektronische System und/oder einen anderen Mikrocontroller,
wobei der Schritt c/ vorzugsweise aus einer Schleifenwiederholung von Hardware-Interrupts besteht, wobei der Mikrocontroller vorzugsweise so konfiguriert ist, dass die von der Sendestufe der Vorrichtung gesendeten Stromimpulse Störimpulse sind.

15. Verfahren nach Anspruch 14, wobei der Takt der Störimpulse zufällig ist, vorzugsweise auf einem Wert nahe der oder nahe einem Untervielfachen der Taktfrequenz des zu überwachenden elektronischen Systems,
wobei die Stärke der Störimpulse vorzugsweise mindestens zwei Werte hat, von denen einer, der dazu bestimmt ist, jede elektronische Angriffsschaltung zu sättigen, höher ist als die Stärke der Strahlung des zu überwachenden Systems, und der andere im Wesentlichen gleich der Stärke der Strahlung des zu überwachenden Systems ist.

## Claims

1. Device (1) for protecting and supervising an electronic system comprising at least one electronic component, such as an integrated circuit (IC), in particular against electromagnetic attacks, comprising:
- a pulse transformer (2) comprising:
a first sheet or layer (20) based on magnetic ferrite powder, to be applied to at least one surface of the electronic system;
at least one transmission coil (21) and at least one reception coil (22) encircling a first area and a second area of the first ferrite sheet or layer, respectively, the first and second areas being separate from each other,
- a transmission stage (3) connected to the transmission coil and configured to transmit pulses of electrical current to said transmission coil,
- a reception stage (4) connected to the reception coil and configured to detect at least the peak amplitude of the electrical voltage generated by the electromagnetic force across the terminals of the reception coil,
- a microcontroller (5) comprising:
at least one input-output (I/O, Oi, Ob) connected to the transmission stage with a view to triggering the pulses, and
an analogue-digital converter (CAN, CANp), which is connected to the reception stage with a view to informing the electronic system and/or another microcontroller, via a bus (50), of variations in the peak amplitude across the terminals of the reception coil.

2. Device (1) according to Claim 1, the first ferrite sheet or layer being made of an alloy of iron oxide, preferably chosen from Fe₂(Ni₁₋ₓ Znₓ)O₄ and Fe₂(Mn₁₋ₓ Znₓ)O₄ and preferably having a complex magnetic permeability (µr=µ'-jµ") with j²=-1, µ' being higher than 1, and typically comprised between 40 and 125, up to at least a frequency equal to 1 kHz and preferably up to at least 10 MHz, and µ" being lower than 1 up to at least a frequency of 1 kHz and preferably up to at least 10 MHz.

3. Device (1) according to one of the preceding claims, the magnetic ferrite powder of the first sheet or layer having a relative magnetic permeability µr the variation in which is smaller than 1% in a temperature range comprising at least the operating temperature range of the electronic system, the temperature range preferably being comprised between 0°C and 70°C when the electronic system is intended for commercial applications, or between -40°C and 85°C when the electronic system is intended for industrial applications, or between -55°C and 125°C when the electronic system is intended for military applications.

4. Device (1) according to one of the preceding claims, comprising a second ferrite-based sheet or layer that is stacked on top of the first ferrite sheet or layer, and that is not encircled by the transmission and reception coils.

5. Device (1) according to one of the preceding claims, the reception stage comprising, by way of means for detecting the peak amplitude across the terminals of the reception coil, at least a rectifier diode, a capacitor and a means for discharging the capacitor, the means for discharging the capacitor preferably being a resistor or an n-channel MOSFET short-circuiting the capacitor.

6. Device (1) according to one of Claims 1 to 4, the reception stage comprising, by way of means for detecting the peak amplitude across the terminals of the reception coil, an operational amplifier configured to act as a peak detector.

7. Device (1) according to one of the preceding claims, further comprising at least one film of piezoelectric or pyroelectric material that is polarized in the direction of its thickness, said film being arranged above or below the first ferrite sheet or layer, the reception stage furthermore being configured to detect the peak amplitude of the voltage generated across the terminals of the film of piezoelectric or pyroelectric material, and the microcontroller (5) further comprising an analogue-digital converter (CANp) connected to the reception stage with a view to informing the electronic system and/or the other microcontroller, via a bus (50), of variations in the peak amplitude across the terminals of the film of piezoelectric or pyroelectric material, the film of piezoelectric or pyroelectric material preferably being a film of polyvinylidene fluoride (PVDF) with metallized main faces forming electrodes.

8. Device (1) according to Claim 7, the reception stage comprising, by way of means for detecting the peak amplitude across the terminals of the film of piezoelectric or pyroelectric material, at least a rectifier diode, a capacitor and a means for discharging the capacitor, the means for discharging the capacitor preferably being a resistor or an n-channel MOSFET short-circuiting the capacitor.

9. Device (1) according to Claim 7, the reception stage comprising, by way of means for detecting the peak amplitude of the voltage generated across the terminals of the film of piezoelectric or pyroelectric material, an operational amplifier configured to act as a peak detector.

10. Device (1) according to one of the preceding claims, the one or more buses (50) for informing the electronic system and/or the other microcontroller being one or more I2C or UART buses the security of which is preferably ensured by means of a symmetric encryption algorithm (SEA) .

11. Device (1) according to one of the preceding claims, the microcontroller comprising two separate input-outputs (Oi, Ob) connected to the transmission stage, one (Oi) being dedicated to triggering pulses for monitoring the integrity of the ferrite sheet or layer (20), the other (Ob) being dedicated to triggering electromagnetic jamming pulses, the microcontroller preferably further comprising a randomly activated pulse-width modulator for making the widths of jamming pulses emitted by the transmission stage vary randomly.

12. Device (1) according to one of the preceding claims, the ferrite sheet or layer with the transmission and reception coils being borne by a flexible, and preferably adhesive, carrier that is to be applied against the surface of the electronic system, the device further comprising an electrical battery for powering the microcontroller, said battery being connected to a voltage regulator, preferably a low-dropout (LDO) voltage regulator, that is configured to regulate the voltage of the battery to a stable voltage (Vcc), the microcontroller further comprising an analogue-digital converter (CANvb) for managing battery charge.

13. Device (1) according to one of the preceding claims, further comprising a photodetector the light-level threshold of which characterizes the openness of a package in which the electronic system is located.

14. Method for protecting and supervising an electronic system, comprising the following steps:
a/ providing the protective device according to one of the preceding claims, this including applying the sheet or layer (20) based on magnetic ferrite powder to at least one surface of the electronic system;
b/ calibrating the device by taking a first measurement of the peak amplitude across the terminals of the reception coil in order to determine a reference value;
c/ once the calibration has been carried out, triggering at least one hardware interrupt on the input-output (I/O) so as to detect the value of the effective peak amplitude and to compare it to the reference value;
d/ if the comparison in step c/ between the effective value and the reference value corresponds to an attack situation then warning the electronic system and/or another microcontroller.
step c/ preferably consisting in repeatedly carrying out again and again hardware interrupts, the microcontroller preferably being configured so that the current pulses transmitted by the transmission stage of the device are jamming pulses.

15. Method according to Claim 14, the repetition rate of the jamming pulses being random, preferably at a value close to or submultiple close to the clock frequency of the electronic system to be supervised, the intensity of the jamming pulses preferably having at least two values, one of which, which is intended to saturate any attacking electronic circuit, is higher than the intensity of the radiation of the system to be supervised and the other of which is substantially equal to the intensity of the radiation of the system to be supervised.
